# EUROPEAN PATENT APPLICATION

(11) **EP 1 604 736 A1**
(43) Date of publication of application: **14.12.2005**
(21) Application number: 04714878.8
(22) Date of filing: 26.02.2004
(51) Int. Cl.: B01J 19/08, B03C 3/02, B03C 3/40, B03C 3/41, H01T 23/00, H01T 19/04

(54) **AIR ACTIVATING DEVICE**

(30) Priority: 27.02.2003 JP 2003051388
(71) Applicant: National Institute of Advanced Industrial Science and Technology, Tokyo 100-8921 (JP); Three Arrows Inc., Kobe-shi, Hyogo 650-0044 (JP)
(72) Inventor: Kiuchi, Masato, Nat. Inst. of Adv. Science & Tech., Ikeda-shi, Osaka 563-8577 (JP); Matsutani, T., Nat. Inst. of Adv. Science & Techn., Ikeda-shi, Osaka 563-8577 (JP); Sakurai, H., Nat. Inst. of Adv. Science & Techn., Ikeda-shi, Osaka 563-8577 (JP); Tokuda, Kazuo, Ikeda-shi, Osaka 563-0031 (JP)
(74) Representative: Bolinches, Michel Jean-Marie
(86) International application number: PCT/JP2004/002283
(87) International publication number: WO 2004/076061

(57) **Abstract**

An air activating device comprising a wind tunnel (1) formed with a suction port and an exhaust port, a first corona discharge electrode pair (4) and a second corona discharge electrode pair (5) disposed in the wind tunnel (1) to generate corona discharge, and an ozone generating lamp (6) disposed in the wind tunnel to generate ozone, wherein the first corona discharge electrode pair (4), the ozone generating lamp (6) and the second corona discharge electrode pair (5) are disposed in the order mention in an air flowing direction from the suction port to the exhaust port, the first and second corona discharge electrode pairs (4, 5) respectively have discharge electrodes (41, 51) and counter electrodes (42, 52), and the discharge electrodes (41, 51) and counter electrodes (42, 52) are disposed in the order mentioned in the air flowing direction.

## Description

### TECHNICAL FIELD

The present invention relates to air activating devices for activating air with negative ions generated by a corona discharge.

### BACKGROUND ART

Air activating devices are already known wherein negative ions are generated by a corona discharge and entrained by a stream of air by an electric fan. However, such air activating devices wherein the electric fan is used have the problem of necessitating great power consumption and producing a loud noise.

To solve this problem, the device disclosed, for example, in the publication of JP-U No. 8-9137 comprises a pair of corona discharge electrodes, i.e., a needle electrode and a tubular electrode, for generating negative ions. A high voltage is impressed across the electrodes to produce an air stream containing negative ions and flowing from the needle electrode to the tubular electrode. Thus, the negative ions can be forced out of the device without using any fan.

The disclosed device is nevertheless insufficient in the quantity of negative ions generated, failing to fully activate air. Although it appears useful to increase the voltage to be applied or to use electrodes of larger size so as to generate an increased quantity of negative ions, the device then has the problem of becoming complex or large-sized.

An object of the present invention, which has been accomplished to solve the above problems, is to provide an air activating device which is simple in construction and which is nevertheless adapted to generate a sufficient quantity of negative ions.

### DISCLOSURE OF THE INVENTION

The above object of the present invention can be fulfilled by an air activating device comprising a wind tunnel provided with an intake port and an exhaust port, a first corona discharge electrode pair and a second corona discharge electrode pair arranged inside the wind tunnel for generating a corona discharge, and ozone generating means disposed inside the wind tunnel for generating ozone, the first corona discharge electrode pair, the ozone generating means and the second corona discharge electrode pair being arranged in the order mentioned in the direction of flow of air from the intake port to the exhaust port, each of the first and second corona discharge electrode pairs having a discharge electrode and a counter electrode, the discharge electrode and the counter electrode being arranged in the order mentioned in the above-mentioned direction of flow of air.

With the device thus constructed, the ozone generating means is disposed between the two corona discharge electrode pairs, so that a large quantity of negative ions can be generated by the interaction of the two electrode pairs with the ozone generating means although the device is simple in construction.

When the discharge electrodes which are components of the two corona discharge electrode pairs each have at least one discharge portion in the form of a needle, these electrodes achieve an improved discharge efficiency. Further when the counter electrodes which are components of the electrode pairs are each in the form of a tube having an axis in the direction of flow of air, and if the discharge portion of each discharge electrode is so disposed as to extend toward an opening of the corresponding counter electrode, the ions generated by the discharge electrode pass through the tubular counter electrode, permitting ion wind to flow smoothly, and an increased amount of ion wind can be released to the outside of the device.

It is further desirable that in the first corona discharge electrode pair, the direction from the uppermost portion or lowermost portion of an upper stream opening edge of the counter electrode to a downstream end of the discharge portion make an angle of 30 to 60 degrees with the direction in which the discharge portion extends when the angle is seen from one side. This greatly increases the amount of ion wind. It is further desirable that in the second corona discharge electrode pair, the direction from the uppermost portion or lowermost portion of an upper stream opening edge of the counter electrode to a downstream end of the discharge portion make an angle of 75 to 165 degrees with the direction in which the discharge portion extends when the angle is seen from one side. This greatly increases the quantity of negative ions to be generated.

When the electrodes of each of the corona discharge electrode pairs of the air activating device are plated with gold, the electrode can be improved in durability without necessitating maintenance work such as polishing, assuring the device of the generation of a large quantity of negative ions over a prolonged period of time. Preferably, the gold plating forms a coating having a thickness of at least 0.01 µm to not larger than 1 mm.

The air activating device described above is usable for various applications to produce, for example, deodorant and molding inhibiting effects. Accordingly, the device is usable as attached to garbage disposal devices or toilet bowls or as installed in bathrooms.

### BRIEF DESCRIPTION OF THE DRAWINGS

FIG. 1 is a perspective view showing an embodiment of air activating device of the present invention.
FIG. 2 is a side elevation in section showing a wind tunnel of the air activating device shown in FIG. 1.
FIG. 3 is a view in section taken along the line A-A in FIG. 2.
FIG. 4 is a view in section taken along the line B-B in FIG. 2.
FIG. 5 is a perspective view showing another example of corona discharge electrode pair.
FIG. 6 includes side elevations showing a garbage treating device having the air activating device of the invention attached thereto.
FIG. 7 is a side elevation showing a toilet bowl having the air activating device of the invention attached thereto.
FIG. 8(a) is a perspective view showing a bathroom equipped with the air activating device of the invention, and FIG. 8(b) is a fragmentary view in section of the same.
FIG. 9 is a front view showing a shoe box equipped with the air activating device of the invention.

### BEST MODE OF CARRYING OUT THE INVENTION

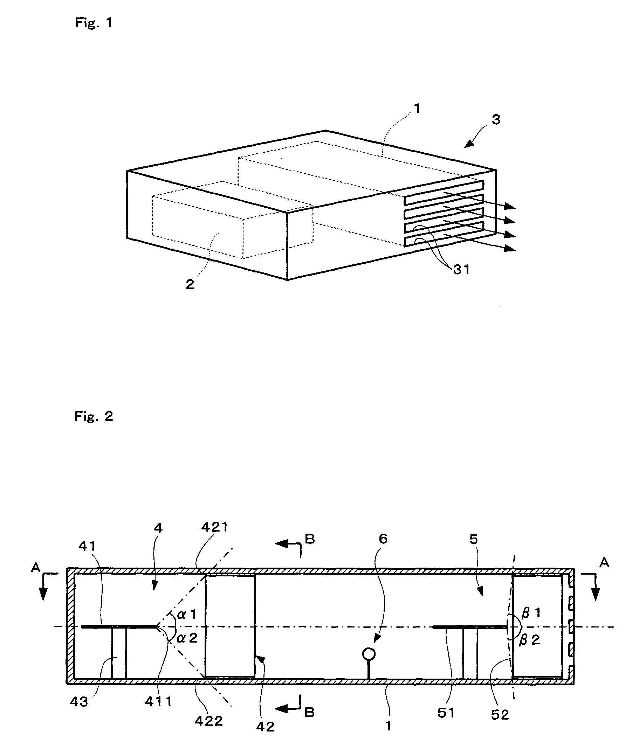

An air activating device embodying the present invention will be described below with reference to the drawings. FIG. 1 is a perspective view of the air activating device as an embodiment of the invention.

With reference to FIG. 1, the air activating device has a casing 3 having enclosed therein a wind tunnel 1 and a power source 2 for supplying corona discharge current. The wind tunnel 1 is rectangular in cross section and is adapted to force out air through exhaust ports 31 formed in the front wall of the casing 3 to the outside of the casing 2. The casing 1 has an unillustrated intake port formed in its rear wall. The air admitted through this intake port flows through the wind tunnel 1 and is discharged from the exhaust ports 31.

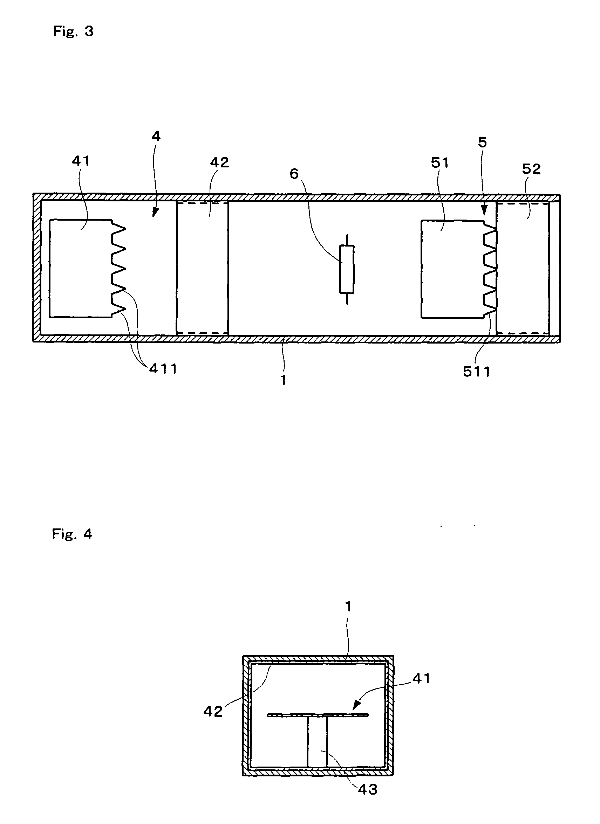

FIG. 2 is a side elevation in section of the wind tunnel, FIG. 3 is a view in section taken along the line A-A in FIG. 2, and FIG. 4 is a view in section taken along the line B-B in FIG. 2. As shown in FIG. 2, the wind tunnel 1 has an inner end positioned at the upstream side with respect to the direction of air therethrough and provided with a first corona discharge electrode pair 4 for generating negative ions by a corona discharge. On the other hand, a second corona discharge electrode pair 5 for similarly generating negative ions is provided in the vicinity of the exhaust ports 31 at the downstream side of the wind tunnel 1. Interposed between the first and second corona discharge electrode pairs 4, 5 is a lamp for generating ozone (ozone generating means) 6.

As shown in FIGS. 2 to 4, the first electrode pair 4 comprise a discharge electrode 41 to which a negative voltage is applied from the power source 2, and a counter electrode 42 which is grounded. The discharge electrode 41 is horizontally supported by a support member 43 which is in the form of a plate. The discharge electrode 41 has a downstream edge provided with a plurality of discharge portions 411 in the form of needles, extending horizontally in the direction of flow of air, and arranged at equal intervals. On the other hand, the counter electrode 42 is in the form of a rectangular tube of small wall thickness and having an axis extending longitudinally of the wind tunnel 1. The electrode 42 has an outer peripheral surface entirely in contact with the inner peripheral surface of the wind tunnel 1. Consequently, the counter electrode 42 is greater than the discharge electrode 41 in horizontal width. Incidentally, the number of discharge portions 411 is not limited particularly; at least one discharge portion 411 may be provided. The electrodes 41, 42 can be made from stainless steel or like metal.

The two electrodes 41, 42 are in the position relationship to be described below. As seen in FIG. 2, the discharge electrode 41 is disposed on a plane extending through the approximate center of the counter electrode 42 with respect to the vertical direction. The discharge electrode 41 is positioned upstream from the counter electrode 42 with respect to the horizontal direction. When seen from one side, the direction from an optional point on the upstream opening edge 421 of upper surface of the counter electrode 42 to the downstream end of one of the discharge portions 411 makes an angle α1 of 30 to 60 degrees with the direction in which the discharge portion 41 extends so as to increase the amount of ion wind flowing toward the downstream side as will be described later. Especially when the angle α is 40 to 50 degrees, the amount of ion wind further increases. Since the discharge electrode 41 is positioned at the approximate center of the counter electrode 42 with respect to the vertical direction, the direction from an optional point on the upstream opening edge 422 of lower surface of the counter electrode 42 to the downstream end of one of the discharge portions 411 also makes the same angle as above, i.e., an angle α2 of 30 to 60 degrees, with the direction in which the discharge portion 411 extends when seen from one side.

Like the first corona discharge electrode pair 4, the second corona discharge electrode pair 5 comprise a discharge electrode 51 having discharge portions 511 in the form of needles, and a counter electrode 52 in the form of a rectangular tube. However, the electrode pair 5 differs from the first electrode pair 4 in the position relationship between the electrodes 51, 52. Stated more specifically with reference to FIG. 2, the discharge electrode 51 is positioned at the approximate center of the counter electrode 52 with respect to the vertical direction, whereas the second corona discharge electrode pair 5 are different from the first electrode pair 4 in the horizontal spacing therebetween, such that angles β1, β2 corresponding to the above-mentioned angles α1, α2 are 75 to 165 degrees, more preferably 95 to 150 degrees, because if the angle β is less than 75 degrees, the electrons to be generated are liable to be carried downstream as will be described later and further because if the angle β is greater than 165 degrees, electrons tend to flow reversely.

The ozone generating lamp 6 is driven with the power to be supplied from the power source 2 for generating ozone. The ozone generating lamp 6 can be a known one such as a UV generating tube.

The power source 2 is designed to apply a negative high voltage to the discharge electrodes 41, 51 of the corona discharge electrode pairs 4, 5 at all times. The voltage to be used may be either a constant voltage or pulse output voltage.

The operation of the air activating device thus constructed will be described below. First, voltage is applied to the first and second corona discharge electrode pairs 4, 5 to create corona discharges, and power is supplied to the ozone generating lamp 6 to generate ozone. This causes the first corona discharge electrode pair 4 to produce the following phenomena. The corona discharge activates the air surrounding the discharge needle portions 411 of the discharge electrode 41, generating ozone, excited neutral oxygen molecules and positively or negatively charged oxygen molecules. The negatively charged oxygen molecules, i.e., negative ions, are attracted to the counter electrode 42 with the Coulomb force, whereby ion wind is produced which flows from the discharge electrode 41 toward the counter electrode 42. Since the counter electrode 42 is in the form of a rectangular tube, the ion wind occurring passes through the counter electrode 42 to flow toward the ozone generating lamp 6. Thus, the ion wind is produced inside the wind tunnel 1, flowing from the first corona discharge electrode pair 4 toward the exhaust ports 31.

Among the gases thus generated by the first corona discharge electrode pair 4, the ozone, excited neutral oxygen molecules and negatively charged oxygen molecules are entrained by the ion wind toward the ozone generating lamp 6, which in turn produces further excited oxygen molecules and a hydrate thereof with such molecules serving as nuclei. The resulting oxygen molecules and hydrate thereof are carried by the ion wind further downstream, i.e., toward the second corona discharge electrode pair 5 along with the negative ions and other substances generated. The following phenomenon takes place at the second corona discharge electrode pair 5 in addition to the generation of negative ions due to the corona discharge. The discharge electrode 51 generates electrons, which are supplied to the excited oxygen molecules transported from the upstream side, negatively charging the oxygen molecules to produce negative ions. A large quantity of negative ions are generated in this way and forced out of the exhaust ports 31.

With the air activating device of the present embodiment, the oxygen molecules excited by the ozone generating lamp 6 are negatively charged at the second corona discharge electrode pair 5 to produce negative ions, in addition to the negative ions generated by the two corona discharge electrode pairs 4, 5. Accordingly, the two corona discharge electrode pairs are not used to merely increase the quantity of negative ions but are used in combination with the ozone generating lamp 6 disposed therebetween to increase the quantity of negative ions by the interaction of the electrode pairs 4, 5 with the lamp 6. Consequently, negative ions can be generated in a large quantity as will be substantiated by the examples given later.

The present invention is not limited to the above embodiment but can be modified variously without departing from the spirit of the invention. For example, although the counter electrodes 42, 52 are each in the form of a rectangular tube, these electrodes need not always be so shaped but can be in the form of hollow cylinders or polygonal tubes.

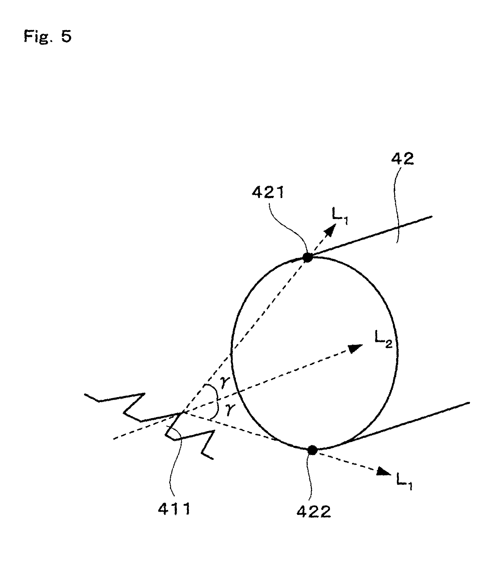

Since each of the counter electrodes of the above embodiment is in the form of a rectangular tube, the position relationship between the discharge electrode and the counter electrode is defined in terms of the angle α or β the direction from an optional point on the upstream opening edge of upper or lower surface of the counter electrode to the downstream end of the discharge portion makes with the direction in which the discharge portion extends when the angle is seen from one side. However, in the case where the counter electrode is in the form of a hollow cylinder or polygonal tube as described above, the angle γ stated below is to be defined. With reference to FIG. 5 showing the first corona discharge electrode pair 4, the angle γ is to be defined which the direction L₁ from the uppermost portion 421 or lowermost portion 422 of the upstream opening edge of the counter electrode 42 to the downstream end of one of the discharge portions 411 makes with the direction L₂ in which the discharge portion extends when the angle is seen from one side.

Although the counter electrodes 42, 52 of the corona discharge electrode pairs 4, 5 of the above embodiment are tubular, ion wind can be produced even when flat plates are used as these counter electrodes. In this case, a single flat plate can be disposed as opposed to each of the discharge electrodes 41, 51, or a pair of flat plates can be arranged on opposite sides of a plane containing the discharge electrode 41 or 51.

When air is activated as stated above, active oxygen will be generated depending on the humidity and is likely to oxidize the electrode surfaces. If such oxidation occurs, the electrodes become covered with an oxide and is likely to cease discharging. This trouble can be obviated by removing the oxide from the electrodes as by grinding, whereby the electrodes can be made serviceable again for a discharge. Alternatively, the discharge electrodes and the counter electrodes may have their surfaces plated with gold. The electrodes can then be improved in durability without necessitating maintenance work such as grinding. The gold coating to be formed by plating is preferably at least 0.01 µm to not larger than 1 mm in thickness. The gold plating operation can be conducted by a known technique.

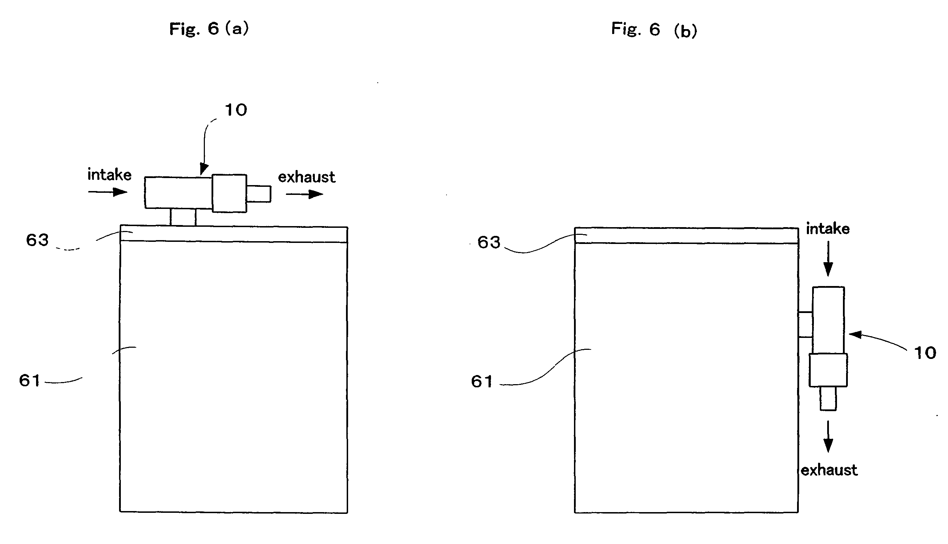

The air activating device of the present invention is usable for various applications to activate air as described above, for example, for deodorization or inhibition of mold. For use as a deodorizing device, the present device is usable, for example, for garbage disposal devices. FIG. 6 shows such an example, i.e., a garbage disposal device wherein microorganisms are used for decomposition. The disposal device comprises a container 61 for containing garbage, and a closure 63 for closing an upper opening of the container 61. An air activating device 10 embodying the invention is mounted on the top wall of the closure 61. When the exhaust from the device 10 is introduced into the container 51, the microorganisms inside the container 61 will be killed, so that the air activating device 10 is mounted on the top wall of the closure 63 so as decompose only the odor to be released from the container. From this viewpoint, the device 10 can be attached alternatively to one side of the container 61 as shown in FIG. 6(b). In this case, the intake port of the air activating device 10 is so disposed as to face toward a portion of the container 61 through which the odor leaks, e.g., toward the closure 63.

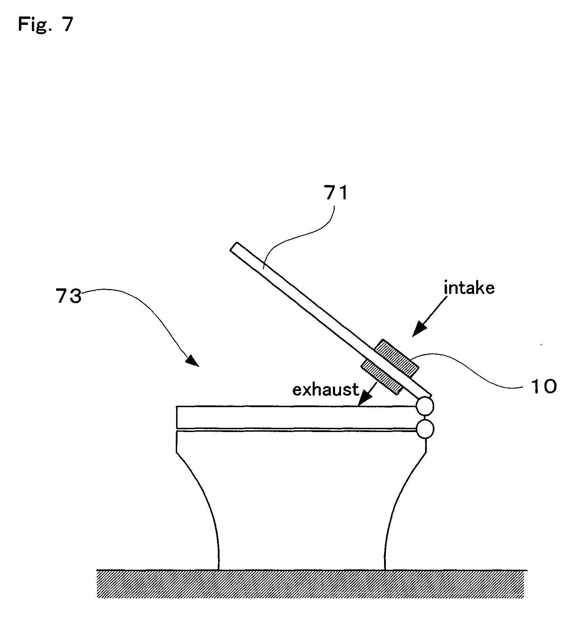

The air activating device 10 can be attached to a toilet bowl, i.e., to the closure 71 of the toilet bowl 73 as shown in FIG. 7. At this time, the device 10 is mounted on the closure 71 with its intake port facing toward the outside of the toilet bowl 73 and with its exhaust ports positioned at the inner surface of the closure 71 so as to face toward the interior of the toilet bowl 73. The odor inside the toilet bowl 73 can then be decomposed effectively. Instead of being attached to the closure, the device 10 can alternatively be attached directly to the body of the toilet bowl. In this case, the intake port is positioned to face toward the outside of the body of the toilet bowl, with the exhaust ports facing toward the interior of the toilet bowl in the same manner as when the device is attached to the closure.

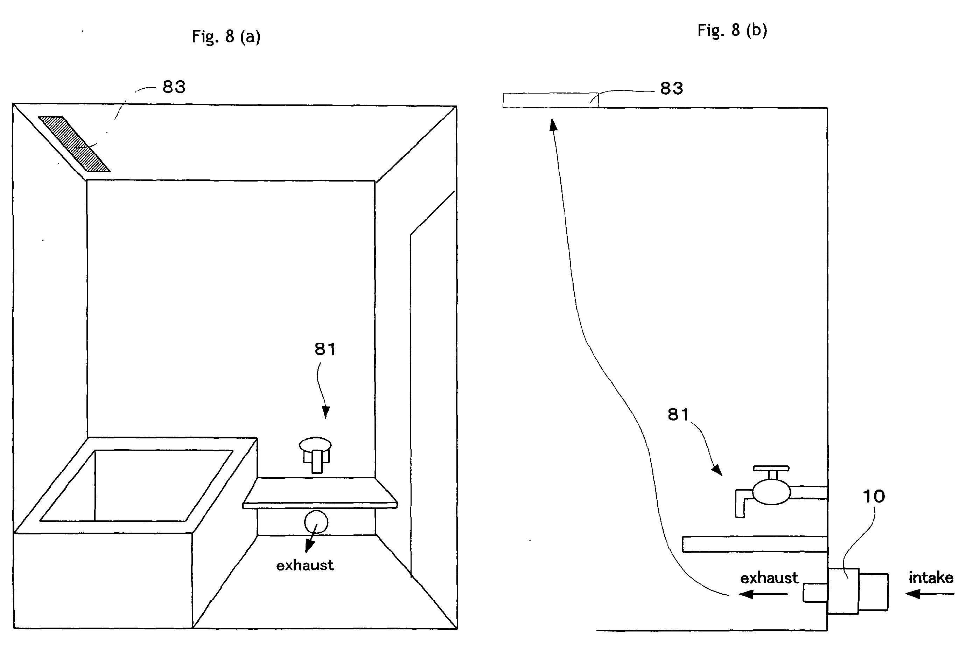

The present device can be provided for a bathroom, e.g., prefabricated bath, or shoe box for inhibiting fungi or mold. When to be provided in the bathroom, it is desirable to install the air activating device 10 as shown in FIG. 8 so that the exhaust can be released at a lower position inside the bathroom 81 where microorganisms are most likely to grow. Since the ceiling of the prefabricated bath is provided with a ventilation fan 83, the exhaust from the device 10 released at the position close to the floor is drawn by the fan 83 while flowing upward. Accordingly, activated air diffuses through the whole interior of the bathroom to inhibit mold.

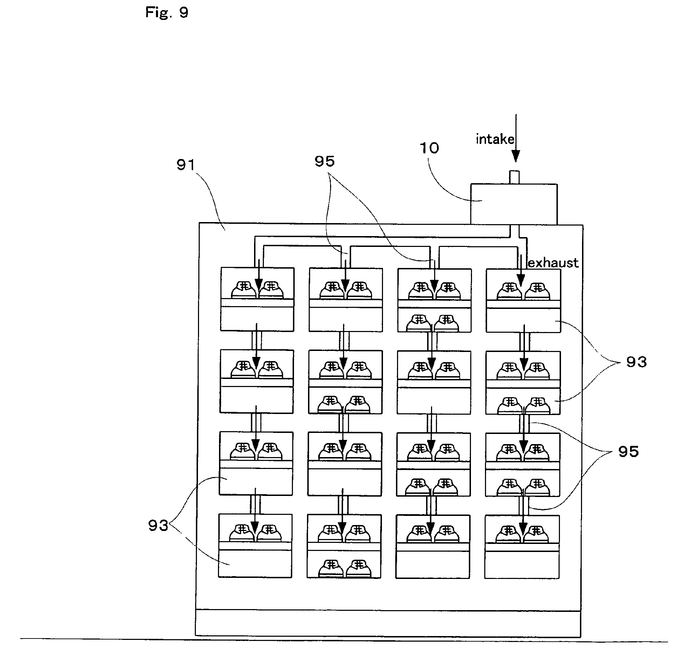

Further when to be used for a shoe box 91, the air activating device 10 is installed on the upper portion of the box 91 as shown in FIG. 9. The exhaust from the device 10 is caused to flow individually into compartments 93 of the box 91, whereby mold can be inhibited effectively within the shoe box 91. The exhaust from the device 10 may be led into the individual compartments 93 as stated above through piping 95 extending to the compartments 93, or may be caused to spread out through the entire interior of the shoe box 91. In either case, the activated air, which is heavy, is caused to flow down from the upper portion of the shoe box 91 to inhibit mold effectively throughout the entire interior of the shoe box if the device 10 is installed on the box upper portion.

The air activating device of the present invention, which has deodorant and mold inhibiting effects, is also capable of decomposing toxic gases such as hydrogen sulfide.

### EXAMPLES

The present invention will be described below in greater detail with reference to the following examples. However, the invention is not limited to these examples.

### (Example 1)

The quantity of negative ions to be generated will be described in Example 1. First, an experiment was conducted on the relationship between the angle α involved in the first corona discharge electrode pair 4 and the amount of ion wind to determine the angle α giving a large amount of wind. Listed in Table 1 below are the amounts of ion wind measured at varying angles α of 25 to 65 degrees. The amount of ion wind as forced out from an exhaust port measuring 15 mm × 120 mm was measured.

**Table 1**

| (Experiment 1) | |
|---|---|
| Angle α (deg) | Amount of wind (liters/min) |
| 25 | 0.1 |
| 30 | 1.0 |
| 40 | 3.0 |
| 45 | 6.0 |
| 50 | 3.0 |
| 55 | 2.0 |
| 60 | 1.0 |
| 65 | 0.1 |

Table 1 shows that the amount of ion wind increases as the angle α approaches 45 degrees. On the other hand, the amount of wind decreases greatly when the angle is smaller than 30 degrees or greater than 60 degrees.

Next, the device of the above embodiment was used to measure the quantity of negative ions generated. The angle α involved in the first corona discharge electrode pair 4 was 45 degrees, and the angle β involved in the second corona discharge electrode pair 5 was 90 degrees. Voltage of -8,500 V was applied to the discharge electrode 41 of the first electrode pair 4, and voltage of -7,500 V to the discharge electrode 51 of the second electrode pair 5, with the counter electrodes 42, 52 grounded. Electric power of 5 W was supplied to the ozone generating lamp 6.

An ion counter was disposed at a distance of 20 cm from the exhaust ports 31 of the wind tunnel 1, as positioned perpendicular to the ion wind to measure the quantity of ion wind. The ion counter used was Model ITC-201, product of ANDES Electric Co., Ltd. As Comparative Example, the quantity of ions was also measured with voltage applied only to the first corona discharge electrode pair 4. This corresponds to the conventional device wherein only one corona discharge electrode pair is used.

Given below are experimental results. This experiment was conducted under two conditions which are different in atmospheric temperature and in humidity.

**Table 2**

| (Experiment 2: 27°C in temp., 62% in humidity) | | |
|---|---|---|
| | Example (number/cc) | Comp. Ex. (number/cc) |
| Quantity of negative ions | 1,000,000 | 11,000 |
| Quantity of positive ions | 0 | 0 |

Table 2 reveals that Example of the invention generated about 100 times the quantity of negative ions of Comparative Example, showing that the air was fully activated. This also indicates that the air activating device of the embodiment is not adapted to increase the quantity of negative ions by merely using two corona discharge electrode pairs. Stated more specifically, the two corona discharge electrode pairs 4, 5 are used in combination with the ozone generating lamp 6 to generate negative ions in a quantity several tens of times as great as the quantity conventionally produced, based on the mechanism already described.

**Table 3**

| (Experiment 3: 21°C in temp., 42% in humidity) | | |
|---|---|---|
| | Example (number/cc) | Comp. Ex. (number/cc) |
| Quantity of negative ions | 822,000 | 0 |
| Quantity of positive ions | 0 | 0 |

The quantity of negative ions generated under the above condition is smaller than in Experiment 1 because of the following reason. Negative ions are present in the form of a hydrate resulting from the reaction of oxygen with the water in the air. Accordingly, negative ions are less likely to be generated at a low humidity, while because the amount of water contained in the air is smaller at a low temperature, negative ions will not be generated smoothly also in this case. Thus, Comparative Example produced no negative ions under such a condition. However, Example of the invention generated an exceedingly larger quantity of negative ions than Comparative Example of Experiment 1 even under this condition, although smaller than Example of Experiment 2 according to the invention.

An experiment was also conducted on the quantity of negative ions generated at varying angles β involved in the second corona discharge electrode pair.

**Table 4**

| (Experiment 4) | |
|---|---|
| Angle α (deg) | Quantity of negative ions (number/cc) |
| 70 | 20,000 |
| 75 | 700,000 |
| 80 | 800,000 |
| 85 | 900,000 |
| 90 | 900,000 |
| 95 | 1,000,000 |
| 100 | 1,000,000 |
| 110 | 1,000,000 |
| 120 | 1,000,000 |
| 130 | 1,000,000 |
| 140 | 1,000,000 |
| 150 | 1,000,000 |
| 160 | 900,000 |
| 165 | 900,000 |
| 170 | 500,000 |

Table 4 reveals that the quantity of negative ions is greatest when the angle β is 95 to 150 degrees. On the other hand, the quantity of negative ions is smaller when the angle β is smaller than 75 degrees or larger than 165 degrees.

### (Example 2)

Examples are described below wherein air was activated using the air activating device used in Example 1.

### a. Example 2-1

Hydrogen sulfide was introduced into an acrylic resin container having a capacity of 24 liters to an adjusted concentration of 10 ppm. The air activating device was placed into the container and operated by supplying 4 W of power. Consequently, the concentration of hydrogen sulfide reduced to zero ppm 70 minutes later. Thus, the air activating device of the invention is found effective for decomposing hydrogen sulfide.

The same experiment as above was conducted using a conventional ozone generator of the corona discharge type. The ozone generator was placed into an acrylic resin container prepared under the same initial conditions as above, and operated by supplying 4 W of power. Consequently, the concentration of ozone increased to 100 ppm 70 minutes later, but the concentration of hydrogen sulfide remained unchanged at 10 ppm.

### b. Example 2-2

Garbage in an amount of 1 kg was placed into the container of a garbage disposal device of the microorganism decomposition type, and fermented at a temperature of 24° C for 8 hours. The container was checked for odor at a position 10 cm away from the surface of the container according to 5-level criteria. The container gave off an odor of level 4 (fairy foul odor), mainly an amine-derived odor. This result is attributable to a leak of odor from the container. The garbage disposal device shown in FIG. 6(a) was then operated with a power input of 4 W and thereafter checked again for odor. The evaluation result was level 1 (no odor).

### c. Example 2-3

A prefabricated bath having an area of 1 *tusbo* (about 3.3 m²) had its interior held at a temperature of 30°C and a humidity of 90° C, and a culture medium inoculated with black mold *(Aspergillus niger*) was allowed to stand therein. The growth of black mold was observed on the medium 72 hours later. With the interior of the prefabricated bath maintained under the same condition as above, the air activating device was provided for the bath as illustrated in FIG. 7. The device was then operated with a power input of 6 W. The growth of black mold was not observable 72 hours later.

### d. Example 2-4

Methyl mercaptan in an amount of 5 µg was placed into a toilet bowl with its closure closed. When the closure was opened 5 minutes later, the methyl mercaptan diffused to give off an odor of level 3 (perceivable odor) according to the 5-level criteria at a position 30 cm away from the toilet bowl. The air activating device was then attached to the closure of the toilet bowl as shown in FIG. 8. The activated air was introduced into the toilet bowl under the same condition as above, the closure was opened 5 minutes later, and the vicinity was then checked for odor in the same manner as above. The result of evaluation was level 1 (no odor) according to the 5-level criteria.

### (Example 3)

The durability of the air activating device of the invention will be described in Example 3.

First, the electrodes of the air activating device used in Example 1 were plated with gold. Stated more specifically, the electrodes, which were made of stainless steel, were plated with nickel to provide a base coating, and then subjected to electroless plating to form a gold coating having a thickness of 1 µm. When thereafter operated with a power input of 6 W, the device generated 1,000,000 negative ions/cc at an atmospheric temperature of 27°C and humidity of 60%. The device was continuously operated further for 10,000 hours, generating negative ions at the same rate, i.e., 1,000,000 ions/cc, under the same condition without entailing a reduction in the ion generation rate. This indicates that the gold plating provided for the electrodes gives high durability thereto.

On the other hand, when like device was operated with a power input of 6 W without plating the stainless steel electrodes, the device generated 1,000,000 negative ions/cc at an atmospheric temperature of 27°C and humidity of 60%. When the device was thereafter operated continuously, the electrodes were found to develop corrosion after the lapse of 2,000 hours, failing to maintain the discharge under the same condition and to generate negative ions.

### INDUSTRIAL APPLICABILITY

The present invention provides an air activating device having a simple construction and nevertheless capable of generating a sufficient quantity of negative ions.

## Claims

1. An air activating device comprising:
a wind tunnel provided with an intake port and an exhaust port,
a first corona discharge electrode pair and a second corona discharge electrode pair arranged inside the wind tunnel for generating a corona discharge, and
ozone generating means disposed inside the wind tunnel for generating ozone,
the first corona discharge electrode pair, the ozone generating means and the second corona discharge electrode pair being arranged in the order mentioned in the direction of flow of air from the intake port to the exhaust port,
each of the first and second corona discharge electrode pairs having a discharge electrode and a counter electrode, the discharge electrode and the counter electrode being arranged in the order mentioned in said direction of flow of air.

2. An air activating device according to claim 1 wherein the counter electrodes of the electrode pairs are each in the form of a tube having an axis in said direction of flow of air, and the discharge electrodes of the electrode pairs each have at least one discharge portion in the form of a needle extending toward an opening of the corresponding counter electrode.

3. An air activating device according to claim 2 wherein in the first corona discharge electrode pair, the direction from the uppermost portion or lowermost portion of an upper stream opening edge of the counter electrode to a downstream end of the discharge portion makes an angle of 30 to 60 degrees with the direction in which the discharge portion extends when the angle is seen from one side.

4. An air activating device according to claim 2 or 3 wherein in the second corona discharge electrode pair, the direction from the uppermost portion or lowermost portion of an upper stream opening edge of the counter electrode to a downstream end of the discharge portion makes an angle of 75 to 165 degrees with the direction in which the discharge portion extends when the angle is seen from one side.

5. An air activating device according to any one of claims 1 to 4 wherein the electrodes of each of the corona discharge electrode pairs are plated with gold.

6. An air activating device according to claim 5 wherein the gold plating forms a coating having a thickness of at least 0.01 µm to not larger than 1 mm.
